# EUROPEAN PATENT APPLICATION

(11) **EP 4 596 290 A1**
(43) Date of publication of application: **06.08.2025**
(21) Application number: 24154624.1
(22) Date of filing: 30.01.2024
(51) Int. Cl.: B60K 35/10, B60K 35/20, B60K 35/65

(54) **METHOD AND APPARATUS FOR CONTROLLING A DISPLAY OF A VEHICLE**

(71) Applicant: Bayerische Motoren Werke Aktiengesellschaft, 80809 München (DE)
(72) Inventor: Zaki, Tarek, 80805 München (DE)

(57) **Abstract**

The invention relates to a method, in particular a computer-implemented method, for controlling a display of a vehicle. The method comprises: (i) Receiving sensor-based measurement data which represent a touching-gesture of a hand of a first user to a touch-sensitive surface which is connected to a display, in particular electrically, in particular integrated in the display, of the vehicle wherein the display is arranged such that it is in the field of view of the first user and a second user of the vehicle; (ii) Based on the measurement data analysing a property of the touching-gesture with respect to the touch-sensitive surface; (iii) Based on the analysis determining if the touching-gesture has been applied by the first user or the second user; (iv) Depending on the result of the analysis selecting and presenting an option, in particular layout or menu or settings, that can be selected by the user at the display.

## Description

The present invention is directed to a; in particular computer-implemented, method and an apparatus for controlling a display of a vehicle. The invention is further directed to a vehicle and a computer-program.

Modern vehicles can comprise displays, including a so-called head-up-display. Thereby a driver of the vehicle can control the content which can be presented on the head-up-display. Further vehicle can comprise a centre information device (CID), which can be arranged at a middle console of an interior space of the vehicle, and which can be used both by the driver and a co-driver. In particular the CID can comprise a touch-sensitive surface for selecting options, menus and functions via a touching-gesture. However, in case the driver or the co-driver intend to use the CID they need to search their way through the menu structure individually. In particular for the driver this can require some awareness, and this can distract him from a current traffic situation.

It is an object of the present invention to provide an improved way of controlling a display of a vehicle.

A solution to this problem is provided by the teaching of the independent claims. Various preferred embodiments of the present invention are provided by the teachings of the dependent claims.

A first aspect of the solution is directed to a method, in particular a computer-implemented method, for controlling a display of a vehicle. The method comprises: (i) Receiving sensor-based measurement data which represent a touching-gesture of a hand of a first user to a touch-sensitive surface which is connected to a display, in particular electrically, in particular integrated in the display, of the vehicle wherein the display is arranged such that it is in the field of view of the first user and a second user of the vehicle; (ii) Based on the measurement data analysing a property of the touching-gesture with respect to the touch-sensitive surface; (iii) Based on the analysis determining if the touching-gesture has been applied by the first user or the second user; (iv) Depending on the result of the analysis selecting and presenting an option, in particular layout or menu or settings, that can be selected by the user at the display.

Where the term "comprising" or "including" is used in the present description and claims, it does not exclude other elements or steps. Where an indefinite or definite article is used when referring to a singular noun e.g. "a" or "an", "the", this includes a plural of that noun unless something else is specifically stated.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

The term "one" as used herein are defined in the sense of "one or more". The terms "another" and "a further" and any other variant thereof are to be understood in the sense of "at least one more".

The term "plural" as used herein shall be understood in the sense of "two or more".

The term "configured" or "set up" to perform a certain function (and respective variations thereof) as used herein shall be understood as meaning that the corresponding device is already present in a configuration or setting in which it can perform the function or that it is at least adjustable - i.e. configurable - in such a way that it can perform the function after corresponding adjustment. In this context, the configuration can be carried out, for example, by means of a corresponding setting of parameters of a process sequence or of switches or the like for activating or deactivating functionalities or settings. In particular, the device can have several predetermined configurations or operating modes, so that the configuration can be performed by means of a selection of one of these configurations or operating modes.

The term "display" as used herein means, in particular, an electronic device which can present a visual content such as text or images on a surface, in particular on an integrated surface of the display. Thereby such a display may comprise a sending and receiving unit which are configured to send and receive wireless signals, such as electromagnetic signals, and/or wire-based signals such as electrical signals via a cable connection with another device, such as a control unit.

The term "control unit" as used herein shall be understood in particular as an electronic device comprising a sending and receiving unit for sending and receiving wireless signals, such as electromagnetic signals and/or wire-based signals via cable such as electrical signals. Such a control unit may further include a microprocessor for analysing data and a memory for storing data.

Accordingly, the method of the first aspect can enable an efficient use and control of a display. Because by determining which user of the first user and the second user has applied a touching-gesture an option or menu that can be selected by the user can be presented at the display accordingly. In this way by applying a touching-gesture to the touch-sensitive surface the option or menu which can be relevant to the user is presented at the display. The user, in particular a driver or co-driver respectively, of the first user and the second user which applies the touching-gesture needs less time for searching for the option or menu. In case the user is the driver the time he is distracted from a current traffic situation can be reduced. In case the user is the co-driver the distraction of the driver still can be reduced because there is a reduced time the co-driver is applying touching-gestures to the display. Overall, a driving safety can be increased.

In the following, certain preferred embodiments of the method will be described, which can be arbitrarily combined with each other or with other aspects of the present solution, unless such combination is explicitly excluded or technically impossible.

In some embodiments analysing a property of the touching-gesture comprises determining a direction of the touching-gesture relative to the touch-sensitive surface. By additionally determining a direction of movement of the touching-gesture a more accurate determination which hand has applied the touching-gesture can be enabled.

In some embodiments analysing a property of the touching-gesture comprises determining an intensity of the touching-gesture towards the touch-sensitive surface and wherein the selecting of the option is dependent on the de intensity. This can enable an intensity dependent selection of an option, which can provide a more intuitive use for selecting an option.

In some embodiments the sensor-based measurement data represent a touching-gesture with one or more touching areas, in particular caused by fingers of a hand, and analysing the property of the touching-gesture comprises determining a number of touched areas at the touch-sensitive surface,, and selecting the option is dependent on the number. This enables a more specific and flexible selection of an option or a menu. A user can select an option by the number of fingers he is using for the touching-gesture.

In some embodiments the sensor-based measurement data comprises a value of an electrical property, in particular a capacitance value, a resistance value and/or an induction value, of the touch-sensitive surface. For receiving values of an electrical property, such as capacitance, resistance and/or induction standard sensors can be used. Therefore, this can be implemented with a reasonable effort.

In some embodiments the electrical property is dependent on an area-distribution of the touching-gesture touching the touch-sensitive surface and/or a distance of the touching-gesture to the touch-sensitive surface. For example, in case the touch-sensitive surface is capacitance-sensitive a touching area and/or a distance to the touch-sensitive surface influences a determined capacitance or capacitance change which occurs due to the applied touching-gesture. This enables a more accurate determination of the touching-gesture and subsequently if the touching-gesture has been applied by the first user or the second user.

In some embodiments the option is selected depending on a determined current situation in the vehicle or in the vicinity of the vehicle. For example, in case of an accident, the selected option can be phone-call an emergency number. In this way an efficient call to emergency doctor or police can be enabled.

In some embodiments, an option is presented at the display, which is based on a stored user profile, in particular a user profile which has been established by applying an algorithm based on artificial intelligence. In this way the user can directly access an option or menu which has been previously relevant to him.

A **second aspect** of the solution is directed to an apparatus, wherein the apparatus is configured to perform the method of the first aspect.

In some embodiments, the apparatus comprises: (i) A display of a vehicle, wherein the display is arranged such that it is in the field of view of a first user and a second user of the vehicle; (ii) a touch-sensitive surface, which is connected to the display, in particular electrically, in particular integrated in the display, and which is configured to receive an input by a touching-gesture of a hand of one of the first user and the second user of the vehicle; (iii) a sensor which is configured to receive measurement data which represent the touching-gesture; (iii) a control unit which is configured to: (iv-a) analyse a property of the touching-gesture with respect to the touch-sensitive surface based on the measurement data; (iv-b) determining if the touching-gesture has been applied by the first user or the second user based on the analysis; (iv-c) selecting and presenting an option, in particular layout or menu or settings, that can be selected by a user at the display depending on the result of the selection.

A **third aspect** of the solution is directed to a vehicle comprising an apparatus of the second aspect.

A **fourth aspect** of the present solution is directed to a computer-program with instructions for causing the apparatus of the second aspect to perform the steps of the method of the first aspect.

In particular, the computer program may be stored on a non-volatile medium. Preferably, this is a data carrier in the form of an optical data carrier or a flash memory module. This may be advantageous if the computer program as such is to be traded independently of a processor platform on which the one or more programs are to be executed. In another implementation, the computer program may be present as a file on a data processing unit, particularly a server, and downloadable via a data connection, such as the Internet or a dedicated data connection, such as a proprietary or local area network. In addition, the computer program may have a plurality of interacting individual program modules.

The various embodiments and advantages described above in connection with the first aspect similarly apply to the other aspects.

Further advantages, features and applications are provided in the following detailed description of preferred embodiments and the appended figures, wherein:
**Fig. 1** schematically illustrates a flowchart of an embodiment of a method for controlling a display;
**Fig. 2** schematically illustrates a top view of a vehicle and its interior space of an embodiment; and
**Figs. 3A to 3C** schematically illustrates the display of Fig. 2 with applied touching-gestures of corresponding embodiments.

In the figures, identical reference signs are used for the same or mutually corresponding elements.

### DETAILED DESCRIPTION OF EMBODIMENTS

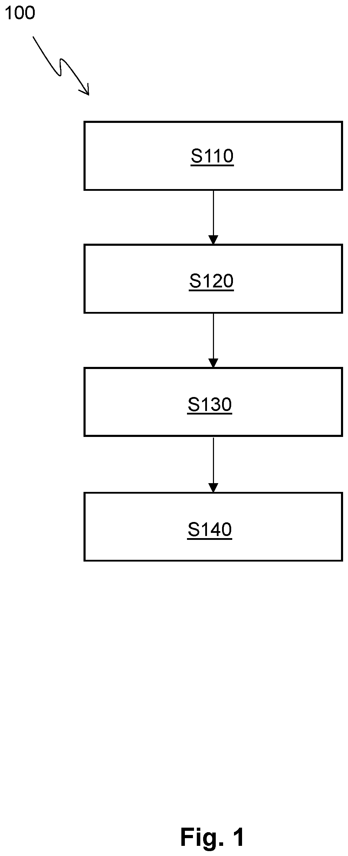

**Fig. 1** schematically illustrates a flowchart 100 of an embodiment of a method for controlling a display 210 of a vehicle 200.

A first step S110 of the method comprises receiving sensor-based measurement data which represent a touching-gesture of a hand 235, 245 of a driver 230 and/or co-driver to a touch-sensitive surface 215 of a centre information display 210 of the vehicle 200, which is arranged in the middle console of the vehicle 200, so that it is in the field of view of a driver 230.

A further step S120 of the method comprises based on the measurement data analysing a property, in particular a capacitance or a resistance or an induction value, of the touching-gesture with respect to the touch-sensitive surface 215.

A further step S130 of the method comprises based on the analysis determining if the touching-gesture has been applied by the driver 230, in particular by its right hand 235, or the co-driver 240, in particular by its left hand 245.

A further step S140 of the method comprises depending on the result of the analysis selecting and presenting an option that can be selected by the user at the centre information display 210.

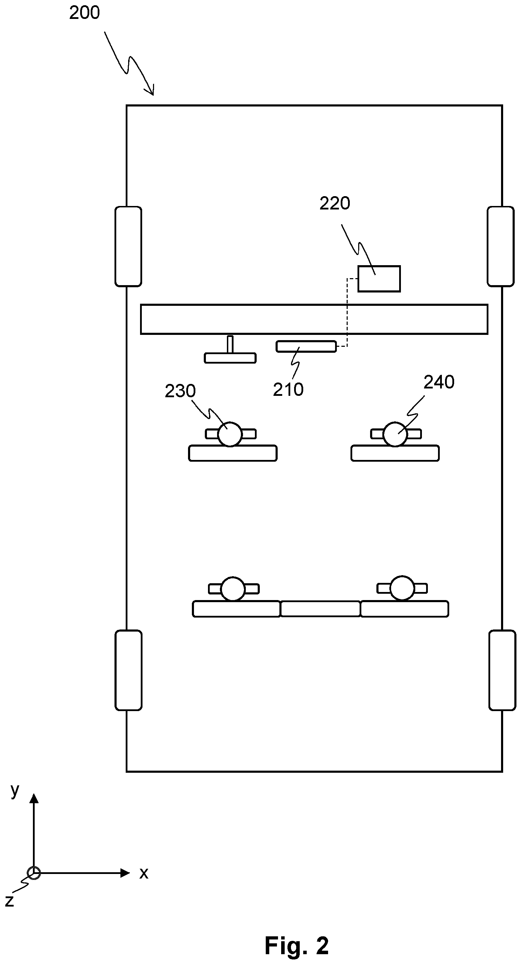

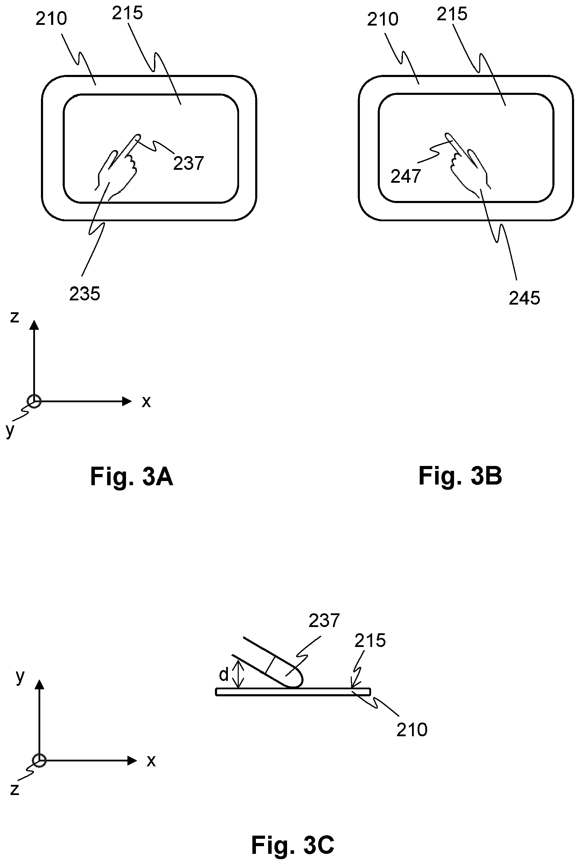

**Fig. 2** schematically illustrates a top view of a vehicle 200 and its interior space with a so-called centre information display (CID) 210 according to an embodiment of the disclosure. According to the schematic coordinate system a driving direction of the vehicle 200 is in y-direction. The centre information display 210 comprises a touch-sensitive surface 215 at which a visual content can be presented. The centre information display 210 is arranged in the area of the middle console of the interior space. Thereby the touch-sensitive surface 215 is arranged in z-x-direction, which is facing front seats in the interior space of the vehicle 200. Therefore, the centre information display 210 in the presentation of Fig. 1 shows a cross-section of a frame of the centre information display 210, but not the touch-sensitive surface 215 for presenting the visual content. The touch-sensitive surface 215 is presented and described further in Figs. 3A and 3B.

It is also possible that a separate touch-sensitive surface (not shown here) is arranged in the interior space within the reach of a driver 230 and/or a co-driver 240. This separate touch-sensitive surface might even be without a function for presenting visual content. This separate touch-sensitive surface can be connected to the centre information display 210 to control it via the separate touch-sensitive surface. It is also possible that the connection is wireless, for example, when a touch-surface of a smartphone is used as touch-sensitive surface, and the smartphone in this way is used to control the centre information display 210.

Further a control unit 220 is shown, which is connected to the centre information display 210. The control unit 220 is configured to analyse data received from the centre information display 210 and to control the centre information display 210 on the basis of the analysis. This is further described in Figs. 3A and 3B.

The centre information display 210 and the control unit 220 each comprise suitable sending and receiving units (not shown here) which are configured to emit and receive wireless signals, such as electromagnetic signals, or electrical signals via a cable connection between each the centre information display 210 and the control unit 220.

Further a driver 230 and a co-driver 240 are shown, which both can apply touching-gestures to the centre information display 210. Due to their seating positions in the vehicle 200 the driver 230 preferably can apply a touching-gesture with his right hand 235 and the co-driver 240 preferably with his left hand 245.

This is described in further detail in Figs. 3A and 3B.

**Figs. 3A and 3B** schematically illustrates the centre information display 210 of Fig. 2 with shown touching-gestures to its touch-sensitive surface 215 of corresponding embodiments of the disclosure. As outlined in Fig. 2 the touch-sensitive surface 215 of extends in the z-x-direction according to the shown schematic coordinate system.

Thereby according to Fig. 3A a touching-gesture with a right hand 235, in particular of a driver 230 of the vehicle 200 is applied to the touch-sensitive surface 215. According to Fig. 3B a touching-gesture with a left hand 245, in particular of a co-driver 240, is applied to the touch-sensitive surface 215.

The movement of each of these touching-gestures can be measured by a sensor which is integrated in the display 210. Thereby, at such a touch-sensitive surface 215 a sensor is already integrated which enables an execution of functions initiated by the touching-gestures at the touch-sensitive surface 215. For example, by touching the touch-sensitive surface 215 electrical charges, in particular a related capacitance value, change locally at the touch-sensitive surface 215 where the touching-gesture is applied. This capacitance change can be determined and can further be used for analysing for example a touching profile of the touching-gesture. The procedure can be applied for other electrical properties, such as resistance or induction. Such a touching profile can be a change of charge at a certain section of the touch-sensitive surface 215. This touching profile can be different for a touching-gesture by a left hand 235 compared to a touching-gesture by a right hand 245 regarding the touch-sensitive surface 215 in the x-z-area. As the positions of the driver 230 and the co-driver 240 are known regarding their seats in the interior space of the vehicle 200, by identifying if a touching-gesture is applied by a right hand 235, in particular by an associated right index finger 237, or a left hand 245, in particular by an associated left index finger 237, a determination is possible if the touching-gesture has been applied by the driver 230 or the co-driver 240.

**Fig. 3C** schematically illustrates a magnified excerpt of the touching-gesture of Fig. 3A in a cross-sectional view. As described above the touch-sensitive surface 215 of the display 210 extends in the x-z-direction according to the shown schematic coordinate system. According to Fig. 3C the touching-gesture is represented by a right index finger 237 of a right hand 235. When touching the touch-sensitive surface 215 with the right index finger 237 a foremost part of the right index finger 237 regarding the positive x-direction is touching the touch-sensitive surface 215, wherein towards the negative x-directing there is an increasing distance d in y-direction of the right index finger 237 towards the touch-sensitive surface 215. This leads to a touching distribution of the right index finger 237 regarding the touch-sensitive surface 215 in y-direction according to this distance d which leads to a capacitance distribution which is dependent on the distance d.

This means a touching profile of the touching-gesture of the right hand 235 regarding the touch-sensitive surface 215 is dependent on a touching region in x-z-direction but also regarding a distribution of a varying distance d of the right index finger 237 in y-direction.

The same applies in an analogue way for the touching profile of the left hand 245 with the left index finger 247 regarding the touch sensitive surface 215.

By analysing the touching profile, the user corresponding to the touching-gesture can be determined.

Once the user, i.e., the driver 230 or the co-driver 240, has been categorized by an analysis of the control unit 220, the control unit 220 can initiate presenting an option or menu which is relevant for the user at the touch-sensitive surface 215 of the display.

While above at least one exemplary embodiment has been described, it has to be noted that a great number of variations thereto exists. Furthermore, it is appreciated that the described exemplary embodiments only illustrate non-limiting examples of how the present solution can be implemented and that it is not intended to limit the scope, the application or the configuration of the herein-described apparatus and methods. Rather, the preceding description will provide the person skilled in the art with constructions for implementing at least one exemplary embodiment of the solution, wherein it has to be understood that various changes of functionality and the arrangement of the elements of the exemplary embodiment can be made, without deviating from the subject-matter defined by the appended claims and their legal equivalents.

### LIST OF REFERENCE SIGNS

- 100: Flowchart of an embodiment of a method
- S110: Receiving measurement data
- S120: Analysing measurement data
- S130: Determining user
- S140: Selecting and presenting an option

- 200: Vehicle
- 210: Centre information display
- 215: Touch-sensitive surface
- 220: Control unit
- 230: Driver
- 235: Right hand of driver
- 237: Right index finger
- 240: Co-driver
- 245: Left hand of co-driver
- 237: Left index finger

- d: distance

## Claims

1. A Method for controlling a display (210) of a vehicle (200) comprising:
Receiving sensor-based measurement data which represent a touching-gesture of a hand (235, 245) of a first user (230, 240) to a touch-sensitive surface (215) which is connected to a display (210) of the vehicle (200), wherein the display (210) is arranged such that it is in the field of view of the first user (230) and a second user (240) of the vehicle (200);
Based on the measurement data analysing a property of the touching-gesture with respect to the touch-sensitive surface (215);
Based on the analysis determining if the touching-gesture has been applied by the first user (233) or the second user (240);
Depending on the result of the analysis selecting and presenting an option that can be selected by the user at the display (210).

2. The Method of claim 1, wherein analysing a property of the touching-gesture comprises determining a direction of the touching-gesture relative to the touch-sensitive surface.

3. The Method of claim 1 or 2, wherein analysing a property of the touching-gesture comprises determining an intensity of the touching-gesture towards the touch-sensitive surface (215) and wherein the selecting of the option is dependent on the intensity.

4. The Method of any of the preceding claims, wherein the sensor-based measurement data represent a touching-gesture with one or more touching areas, and analysing the property of the touching-gesture comprises determining a number of the touched areas at the touch-sensitive surface (215), and selecting the option is dependent on the number.

5. The Method of any of the preceding claims, wherein the sensor-based measurement data comprises a value of an electrical property of the touch-sensitive surface (215).

6. The Method of claim 5, wherein the electrical property is dependent on an area-distribution of the touching-gesture touching the touch-sensitive surface (215) and/or a distance (d) of the touching-gesture to the touch-sensitive surface (215).

7. The Method of any of the preceding claims, wherein the option is selected depending on a determined current situation in the vehicle or in the vicinity of the vehicle.

8. The Method of any of the preceding claims, wherein an option is presented at the display (210) which is based on a stored user profile.

9. An Apparatus which is configured to execute the method according to one of the preceding claims.

10. An Apparatus of claim 9, comprising:
A display (210) of a vehicle (200), wherein the display (210) is arranged such that it is in the field of view of a first user (230) and a second user (240) of the vehicle (200);
a touch-sensitive surface (215), which is connected to the display (210), and
which is configured to receive an input by a touching-gesture of a hand (235, 245) of one of the first user (230) and the second user (240) of the vehicle (200);
a sensor which is configured to receive measurement data which represent the touching-gesture;
a control unit (220) which is configured to:
analyse a property of the touching-gesture with respect to the touch-sensitive surface (215) based on the measurement data;
determining if the touching-gesture has been applied by the first user (230) or
the second user (240) based on the analysis;
selecting and presenting an option that can be selected by a user (230, 240) at the display (210) depending on the result of the selection.

11. A vehicle (200) comprising an apparatus of claim 9 or 10.

12. A computer-program with instructions for causing the apparatus of claim 9 or 10 to perform the steps of the method of any one of claim 1 to 8.
